# EUROPÄISCHE PATENTSCHRIFT

(11) **EP 1 156 897 B1**
(45) Veröffentlichungstag und Bekanntmachung des Hinweises auf die Patenterteilung: **09.04.2003**
(21) Anmeldenummer: 00905045.1
(22) Anmeldetag: 10.02.2000
(51) Int. Cl.: B21D 53/10, B21D 53/16

(54) **GEROLLTE GLEITLAGERBUCHSE**
WRAPPED PLAIN BEARING BUSH
COUSSINET LISSE ENROULE

(30) Priorität: 23.02.1999 DE 19907571
(43) Veröffentlichungstag der Anmeldung: 28.11.2001
(73) Patentinhaber: KS Gleitlager GmbH, 68789 St. Leon-Rot (DE)
(72) Erfinder: BICKLE, Wolfgang, D-68799 Reilingen (DE); STORCH, Thomas, D-68782 Brühl (DE)
(74) Vertreter: Friz, Oliver
(86) Internationale Anmeldenummer: EP0001055
(87) Internationale Veröffentlichungsnummer: WO00050184

(56) Entgegenhaltungen:
- US-A- 2 225 269
- US-A- 4 180 895
- US-A- 4 655 615
- US-A- 4 907 626

## Beschreibung

Die Erfindung betrifft ein Verfahren zum Herstellen einer gerollten Gleitlagerbuchse mit einer über die Umfangsrichtung variierenden Buchsenbreite und bearbeiteten Umfangsenden.

Die gattungsbildende US 4,907,626 zeigt ein Verfahren zum Herstellen einer gerollten Gleitlagerbuchse mit einer über die Umfangsrichtung variierenden Buchsenbreite, wobei zuerst eine im Schnitt V-förmige Prägung in die Oberseite eines Flachmaterialbandes eingebracht wird und danach die Flankenform durch Abtrennen von Bandabschnitten entlang der Prägung gebildet wird. Nach dem Abtrennen muß eine erneute Flankenbearbeitung durchgeführt werden, wenn eine gute Oberflächenqualität erzeugt werden soll.

Derartige Gleitlagerbuchsen sind bekannt, sie finden insbesondere als Pleuellagerbuchsen im kleinen Pleuelauge bei Verbrennungskraftmaschinen Anwendung. Die variierende Buchsenbreite soll daher insbesondere eine Gewichtsersparnis der fest eingepressten Gleitlagerbuchse bewirken aber auch geometrischen Randbedingungen angepaßt sein.

Bislang wurden derartige Gleitlagerbuchsen wie zylindrische Buchsen aus einem rechteckförmigen, streifenförmigen Bandabschnitt des Lager- oder Lagerverbundwerkstoffs gerollt und anschließend wurde die Buchse in einer Breitendreheinrichtung durch spanabhebende Bearbeitung auf die gewünschte Form gebracht. Hierfür wird in einem Breitendrehautomaten einerseits oder beidseits ein rotierend antreibbares Schneidwerkzeug mit einer zur Buchsenlängsachse schräggestellten Umdrehungsachse zugestellt, so dass die spanend bearbeiteten Umfangsenden oder Umfangsendabschnitte in einer Ebene liegen. Auf diese Weise kann eine sogenannte, in der Seitenansicht als Trapezform bezeichnete Buchsenform erreicht werden. Nach dem sogenannten Breitendrehen muß in weiterer spanabhebender Bearbeitung die Außen- und/oder Innenfase der Buchsenenden sehr aufwendig geformt werden.

Anstelle einer Breitendrehvorrichtung kann eine bekannte fertig gerollte zylindrische Gleitlagerbuchse auch mittels eines Fräswerkzeugs so bearbeitet werden, dass sie eine in Umfangsrichtung variierende Buchsenbreite aufweist. Dies ist im Zweifel noch aufwendiger.

Es war auch bekannt, bei gerollten Gleitlagerbuchsen vor dem Verfahrenschritt des Rollens eine in Umfangsrichtung verhältnismäßig kurze rechteckförmige Ausnehmung vom Bandmaterial auszustanzen. Hierdurch wird zwar auch eine Buchse mit in Umfangsrichtung variierender Breite geschaffen; eine Bearbeitung des ausgestanzten Umfangsendabschnitts wird aber nicht durchgeführt (siehe zum Beipiel Katalog der Jörg Vogelsang GmbH & Co. aus 1990, Umformtechnologie, Seite 14, Lagerbuchsen).

GB-A-1 597 9604 lehrt, Buchsen mit in Umfangsrichtung variierender Buchsenbreite paar- oder gruppenweise zu fertigen, indem aus einer einzigen Flachmaterialbahn mehrere einander unmittelbar in Querrichtung begrenzende Streifen zur Herstellung mehrerer Buchsen definiert werden. Es werden zuerst Längsabschnitte aus mehreren Buchsen in Querrichtung nebeneinander gebildet, die dann in Querrichtung gefördert und gerollt werden. Erst dann im gerollten Zustand werden die Buchsen vereinzelt. Wenn eine Bearbeitung der Umfangsenden erwünscht ist, muß dies im Nachhinein geschehen.

Hiervon ausgehend liegt der vorliegenden Erfindung die Aufgabe zugrunde, eine gerollte Gleitlagerbuchse mit einer in Umfangsrichtung variierenden Buchsenbreite zu schaffen, die kostengünstiger herstellbar ist und gleichmäßiger bearbeitete Umfangsenden aufweist als bekannte Buchsen.

Diese Aufgabe wird durch ein Verfahren mit den Merkmalen des Anspruchs 1 gelöst.

Die erfindungsgemäße Verfahren ist also dadurch gekennzeichnet, dass die Gleitlagerbuchse nach dem Rollen keiner spanabhebenden Breitenbearbeitung unterzogen werden muß. Sie weist dementsprechend eine wohl definierte saubere Flankenform auf, die aufgrund ihrer nicht rotationssymmetrischen Geometrie durch die bekannte spanabhebende Breitenbearbeitung und anschließende Flankenbearbeitung niemals erreicht werden könnte. Der Fachmann erkennt also an dem erfindungsgemäßen fertigen Produkt ohne weiteres, dass die in Umfangsrichtung variierende Buchsenbreite nicht durch einen spanabhebenden Bearbeitungsvorgang erzeugt wurde.

Die erfindungsgemäße Gleitlagerbuchse, die aus einem zuvor geformten streifenförmigen Bandabschnitt mit variierender Breite, also einer Formplatine, hergestellt wird, hat den Vorteil, dass die Buchse fertig fallend in dem Roll/Biegewerkzeug ohne anschließende Breitenbearbeitung produziert werden kann.

In besonders vorteilhafter Weise kann, ohne dass eine spanabhebende Breitenbearbeitung erforderlich ist, eine abgesetzte Form, insbesondere eine mehrfach abgesetzte Form der Buchsenbreite erzeugt werden. Hierunter wird ein im mathematischen Sinne unstetiger Verlauf der Umfangsenden der Gleitlagerbuchse verstanden. Aber auch ein abschnittsweise gekrümmter, also nicht linearer Verlauf der Umfangsenden kann sich als vorteilhaft erweisen Eine deratige Form konnte seither nur durch Bearbeitung mittels eines Fräswerkzeugs hergestellt werden.

Es erweist sich desweiteren als vorteilhaft, wenn die die kreisförmigen Umfangsenden bildenden Flankenabschnitte des streifenförmigen Bandabschnitts wenigstens abschnittsweise eine geprägte, also nicht durch spanabhebende Bearbeitung erzeugte Fase aufweisen, die vor dem Rollen des Bandabschnitts im noch ebenen Zustand angebracht wird.

Nach dem erfindungsgemäßen Verfahren wird also ein streifenförmiges endloses Flachmaterialband, in seiner Längsrichtung einer Schneidvorrichtung zugeführt, in der die die schlußendlichen kreisförmigen Umfangsenden bildende Flankenform in das Flachmaterialband geschnitten wird. Es entsteht also eine in Längsrichtung verlaufende Profilierung variierender Breite. Es werden dann Fasen entlang der Ränder des profilierten Flachmaterialbands, vorzugsweise durch Prägen angebracht. Es werden dann die die jeweiligen Gleitlagerbuchsen bildenden Bandabschnitte von dem endlosen Flachmaterialband abgetrennt. Diese Bandabschnitte werden dann auf Buchsenform zur Bildung der fertigen, freifallenden Gleitlagerbuchse gerollt.

Vorzugsweise wird nach dem Schneiden der Flankenform und vor dem Abtrennen und Rollen der Bandabschnitte die jeweiligen Längsseiten gesäumt, profilgewalzt und ggf. gestrehlt. Ebenso können vorzugsweise vor dem Rollen der Bandabschnitte eine Ölnut und/oder Schmierlöcher geprägt oder gestanzt werden. Nach dem Rollen der Buchse braucht nur noch eine Schlagkalibierung sowie eine Außenziehkalibrierung durchgeführt zu werden.

Weitere Merkmale, Einzelheiten und Vorteile der Erfindung ergeben sich aus den beigefügten Patentansprüchen, welche die Erfindung definieren. Eine bevorzugte Ausführungsform der vorliegenden Erfindung wird unter Bezugnahme auf die beigefügte Zeichnung nachfolgend beschrieben. In der Zeichnung zeigt:
- Figur 1: eine Draufsicht auf einen Bandabschnitt im ebenen Zustand vor dem Rollen einer erfindungsgemäßen Gleitlagerbuchse;
- Figur 2: eine perspektivische Ansicht des Abschnitts nach Figur 1;
- Figur 3: eine Seitenansicht der aus dem Bandabschnitt nach Figuren 1 und 2 gerollten Gleitlagerbuchse;
- Figur 4: eine Längsstirnansicht der Gleitlagerbuchse nach Figur 3;
- die Figuren 5 bis 8: den Figuren 1 bis 4 entsprechende Ansichten einer weiteren Ausführungsform der erfindungsgemäßen Gleitlagerbuchse;
- Figur 9: eine schematische Darstellung eines streifenförmigen endlosen Flachmaterialbands mit angedeutetem Schnittverlauf, zur Bildung zweier Bänder.

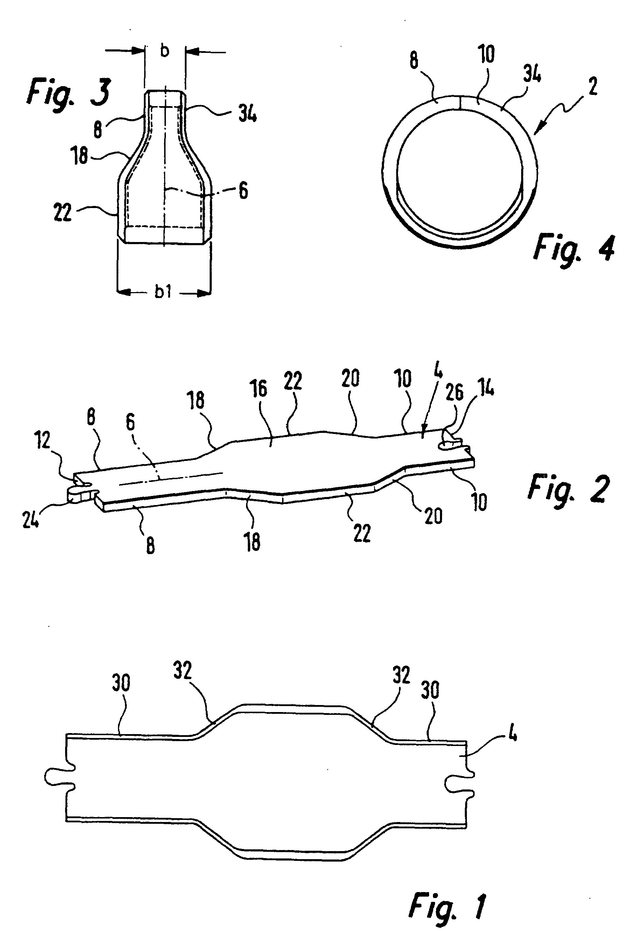

Die Figuren 1 bis 4 zeigen eine erste Ausführungsform einer erfindungsgemäßen Gleitlagerbuchse, die insgesamt mit dem Bezugszeichen 2 bezeichnet ist. Die Gleitlagerbuchse 2 ist aus einem streifenförmigen Bandabschnitt 4 eines metallischen Gleitlagerverbundmaterials hergestellt. Der Bandabschnitt 4 ist eine Formplatine bildend aus einem endlosen Flachmaterialband geschnitten und weist eine variierende Breite auf. Er umfaßt beidseits zu seiner Längsrichtung 6 je zwei parallel zur Längsrichtung 6 verlaufende und miteinander fluchtende Flankenabschnitte 8, 10 auf, die einerseits zu den Enden 12, 14 des Bandabschnitts 4 führen und andererseits in zwei schräg zur Längsrichtung 6 nach außen verlaufende einen breiteren Abschnitt 16 begrenzende Flankenabschnitte 18, 20 übergehen. Diese schrägverlaufenden Flankenabschnitte 18, 20 werden durch einen wiederum zur Längsrichtung 6 parallelen Flankenabschnitt 22 verbunden.

An den im Stoßbereich aneinander anliegenden Enden 12, 14 des Abschnitts 4 ist ein zungenförmiger Vorsprung 24 und eine hierzu komplementäre Ausnehmung 26 geformt.

Die parallel zur Längsrichtung 6 verlaufenden, den breiteren Abschnitt 16 begrenzenden Flankenabschnitte 22 haben eine Fase, die vor dem Einschneiden der übrigen Flankenabschnitte von dem endlosen Band durch strählende Bearbeitung angebracht wurde.

Bei den übrigen Flankenabschnitten 8, 10 und 18, 20 wurde nach dem Schneiden der Profilform eine Fase 30, 32 durch Prägen, also spanlos angeformt. Es könnten aber auch die Flankenabschnitte eines spanlos durch Prägen geformte Fase aufweisen. Die Flankenabschnitte können innen an der Laufschicht und/oder außen am Rücken mit einer Fase versehen sein.

Die Figuren 3 und 4 zeigen zwei Ansichten der gerollten Buchse. Man erkennt die in Umfangsrichtung variierende Breite b. Die in der Ansicht der Figur 4 kreisförmigen Umfangsenden 34 sind in dem hier dargestellten Ausführungsbeispiel symmetrisch zur Längslinie 6 ausgebildet.

Die im Stoßbereich durch die Flankenabschnitte 8, 10 definierte Buchsenbreite beträgt b1 und die durch die Flankenabschnitte 22 bestimmte Buchsenbreite beträgt B. Dazwischen sind die Umfangsenden 34 zweifach abgesetzt und zwar beim Übergang der Flankenabschnitte 8 zu den Flankenabschnitten 18 und von dort abermals zu den Flankenabschnitten 22.

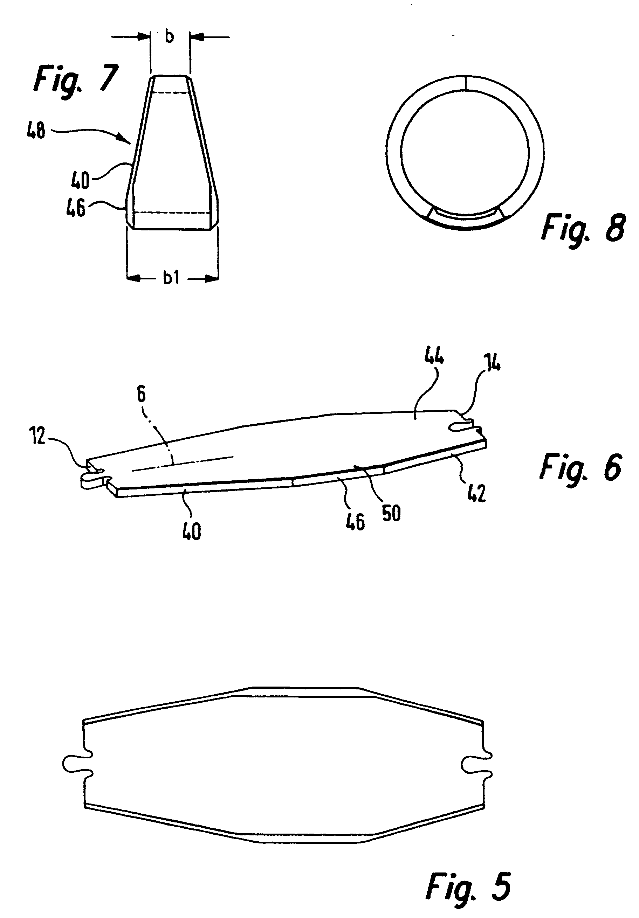

Die Figuren 5 bis 8 zeigen eine den Figuren 1 bis 4 entsprechende Ausführungsform einer erfindungsgemäßen Gleitlagerbuchse, deren in den Stoßbereich zu den Enden 12, 14 auslaufende Flankenabschnitte 40, 42 zur Längsrichtung 6 des streifenförmigen Abschnitts 44 geneigt verlaufen. An ihrem anderen Ende gehen die geraden Flankenabschnitte 40, 42 in einen parallel zur Längsrichtung 6 verlaufenden Flankenabschnitt 44 über. Die Flankenabschnitte 40, 42, 44 sind wie im Zusammenhang mit den Figuren 1 bis 4 beschrieben bearbeitet.

Die aus diesem Bandabschnitt 44 gerollte Gleitlagerbuchse 48 ist einmal abgesetzt, und zwar am Übergang des Flankenabschnitts 46, der einen breiteren Bereich 50 begrenzt, zu den Flankenabschnitten 40, 42.

Die Buchsenbreite variiert also zwischen einer durch den Abstand der beidseitigen Flankenabschnitte 46 definierten Breite b und einer durch den Abstand der Flankenabschnitte 40, 42 an den Enden 12, 14 definierten Breite b1.

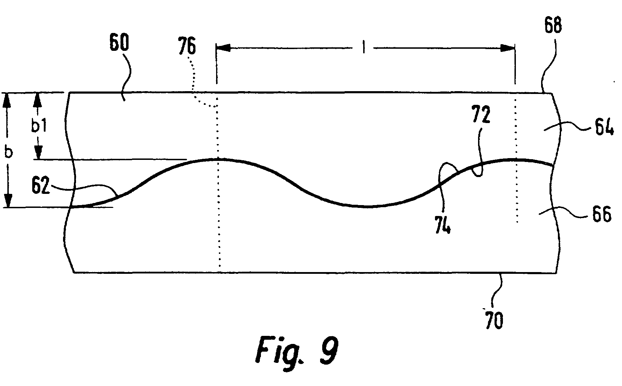

Schließlich zeigt Figur 9 eine schematische Darstellung eines endlosen, als Flachmaterialband vorliegenden Gleitlagerwerkstoffs 60. Die angedeutete bogenförmige Linie 62 bezeichnet einen Schnittverlauf zur Bildung zweier Endlosbänder 64, 66 mit einem einerseits geraden Flankenverlauf 68, 70 und einem andererseits bogenförmigen Flankenverlauf 72, 74. Trennt man von diesem Endlosband Abschnitte der Länge 1 ab, so lassen sich hieraus gerollte Gleitlagerbuchsen mit einer in Umfangsrichtung variierenden Buchsenbreite zwischen b und b1 herstellen, wobei bei der angedeuteten Positionierung des Trennschnitts 76 der Stoßbereich der gerollten Gleitlagerbuchse die kleinere Buchsenbreite b1 aufweist.

Der Vorteil dieser Ausführungsform ist, dass keinerlei Schnittabfall entsteht. Es versteht sich, dass auch Gleitlagerbuchsen gemäß den Figuren 1 bis 8 aus zwei oder mehreren aus einem Endlosband in Längsrichtung geschnittenen Endlosstreifen hergestellt werden können.

## Patentansprüche

1. Verfahren zum Herstellen einer gerollten Gleitlagerbuchse (2, 48) mit einer variierenden Buchsenbreite (b, b1) aus einem streifenförmigen endlosen Flachmaterialband, die folgenden Verfahrensschritte in der angegebenen Reihenfolge umfassend:
Schneiden einer Flankenform aus einem streifenförmigen endlosen Flachmaterialband, so dass eine in Längsrichtung (6) des Flachmaterialbands verlaufende Profilierung variierender Breite gebildet wird,
Anbringen von durchgehenden Fasen entlang der in Längsrichtung (6) des Flachmaterialbands verlaufenden Ränder des Flachmaterialbands,
Abtrennen von Bandabschnitten (4, 44) von dem endlosen Flachmaterialband,
Rollen eines jeweiligen Bandabschnitts (4, 44) auf Buchsenform,
Erhalt einer fertig fallenden Gleitlagerbuchse, die keiner weiteren spanabhebenden Breitenbearbeitung zugeführt werden muß sondern nach dem Rollen auf Buchsenform ihre endgültige, variierende Buchsenbreite (b, b1) aufweist.

2. Verfahren nach Anspruch 1, **dadurch gekennzeichnet, dass** ein mehrfach abgesetzter Verlauf der die Buchsenbreite begrenzenden Umfangsenden (34) beim Schneiden der Flankenform gebildet wird.

3. Verfahren nach Anspruch 1 oder 2, **dadurch gekennzeichnet, dass** zwei parallel zur Längsrichtung (6) des Bandabschnitts (4) verlaufende und miteinander fluchtende Flankenabschnitte (8, 10) sowie zwei schräg zur Längsrichtung (6) nach außen verlaufende einen breiteren Abschnitt (16) begrenzende Flankenabschnitte (18, 20) ein die schrägen Flankenabschnitte (18, 20) miteinander verbindender, zur Längsrichtung (6) wiederum paralleler Flankenabschnitt (22) gebildet wird.

4. Verfahren nach Anspruch 1 oder 2, **dadurch gekennzeichnet, dass** im noch ebenen Zustand von der Stoßfuge ausgehend, zwei schräg zur Längsrichtung (6) nach außen verlaufende Flankenabschnitte (40, 42) und ein die schrägen Flankenabschnitte (40, 42) miteinander verbindender, zur Längsrichtung (6) paralleler Flankenabschnitt (46) gebildet wird.

5. Verfahren nach einem der vorstehenden Ansprüche, **dadurch gekennzeichnet, dass** im Stoßbereich der wenigstens nahezu aneinanderanliegenden Enden (12, 14) des streifenförmigen Bandabschnitts (4, 44), aus dem die Buchse gerollt wird, ein zungenförmiger Vorsprung (24) und eine in Eingriff mit dem Vorsprung bringbare komplementäre Ausnehmung (26) gebildet wird.

6. Verfahren nach einem der vorstehenden Ansprüche, **dadurch gekennzeichnet, dass** die Fasen (30, 32) wenigstens abschnittsweise geprägt werden.

7. Verfahren nach einem der vorstehenden Ansprüche, **dadurch gekennzeichnet, dass** vor dem Schneiden der Flankenform und vor dem Abtrennen der Bandabschnitte die Längsseiten des endlosen Flachmaterialbands besäumt, profilgewalzt und gegebenenfalls gestrehlt werden.

8. Verfahren nach einem der vorstehenden Ansprüche, **dadurch gekennzeichnet, dass** vor dem Rollen der Bandabschnitte eine Ölnut geprägt wird und/oder Schmierlöcher gestanzt werden.

9. Verfahren nach einem der vorstehenden Ansprüche, **dadurch gekennzeichnet, dass** nach dem Rollen der Bandabschnitte auf Buchsenform eine Schlagkalibrierung durchgeführt wird.

10. Verfahren nach einem der vorstehenden Ansprüche, **dadurch gekennzeichnet, dass** nach dem Rollen der Buchse eine Außenziehkalibrierung durchgeführt wird.

11. Verfahren nach einem der vorstehenden Ansprüche, **dadurch gekennzeichnet, dass** aus einem endlosen Flachmaterialband (60) einer ersten Breite mehrere endlose Flachmaterialbänder (64, 66) geringerer und in Längsrichtung (6) variierender Breite geschnitten werden.

## Claims

1. A process for making a wrapped plain bearing bush (2, 48) having a varying bush width (b, b1) from a strip-shaped endless band of flat material, including the following process steps in the order specified:
cutting a flank shape from a strip-shaped endless band of flat material so that a profile of varying width is formed running in the longitudinal direction (6) of the band of flat material,
making continuous chamfers along the edges of the band of flat material that run in the longitudinal direction (6) of the band of flat material,
cutting off sections of band (4, 44) from the endless band of flat material,
wrapping each section of band (4, 44) into a bush shape,
arriving at a finished plain bearing bush which does not need to undergo any further machining of the width but, after being wrapped into a bush shape, has its final varying bush width (b, b1).

2. A process according to Claim 1, **characterised in that**, when the flank shape is cut, a multiple-step line of the circumferential ends (34) delimiting the bush width is formed.

3. A process according to Claim 1 or 2, **characterised in that** two mutually flush flank portions (8, 10) running parallel to the longitudinal direction (6) of the section of band (4) and two flank portions (18, 20) running obliquely outwards with respect to the longitudinal direction (6) and delimiting a broader portion (16)and a flank portion (22) which connects the oblique flank portions (18, 20) to one another and is in its turn parallel to the longitudinal direction (6) are formed.

4. A process according to Claim 1 or 2, **characterised in that** in the still planar condition, starting from the butt joint, two flank portions (40, 42) running obliquely outwards with respect to the longitudinal direction (6) and a flank portion (46) which connects the oblique flank portions (40, 42) to one another and is parallel to the longitudinal direction (6) are formed.

5. A process according to one of the preceding claims, **characterised in that**, in the butting region of the at least nearly mutually adjoining ends (12, 14) of the strip-shaped section of band (4, 44) out of which the bush is wrapped, a tongue-shaped projection (24) and a complementary recess (26) which may be brought into engagement with the projection are formed.

6. A process according to one of the preceding claims, **characterised in that** the chamfers (30, 32) are stamped, at least in certain sections.

7. A process according to one of the preceding claims, **characterised in that**, before the flank shape is cut and before the sections of band are cut off, the longitudinal sides of the endless band of flat material are trimmed and profile-rolled and if necessary threads are chased therein.

8. A process according to one of the preceding claims, **characterised in that**, before the sections of band are wrapped, an oil groove is stamped and/or lubrication holes are punched.

9. A process according to one of the preceding claims, **characterised in that** after the sections of band have been wrapped into a bush shape an impact grooving is carried out.

10. A process according to one of the preceding claims, **characterised in that** after the bush has been wrapped an external drawing-pass grooving is carried out.

11. A process according to one of the preceding claims, **characterised in that** there are cut from an endless band of flat material (60) of a first width a plurality of endless bands of flat material (64, 66) of smaller width and of width varying in the longitudinal direction (6).

## Revendications

1. Procédé de fabrication d'un coussinet lisse enroulé (2, 48) ayant une largeur de coussinet variable (b, b1) à partir d'une bande de matière plate en forme de feuillard sans fin, comprenant les étapes de procédé suivantes dans l'ordre indiqué :
découpe d'un flan à partir d'une bande de matière plate en forme de feuillard sans fin, de façon à former dans le sens longitudinal (6) de la bande de matière plate un profilage qui s'étend avec une largeur variable,
réalisation de chanfreins continus sur toute la longueur des bords de la bande de matière plate qui s'étendent dans le sens longitudinal (6) de la bande de matière plate,
séparation de segments de bande (4, 44) d'avec la bande de matière plate sans fin,
enroulement d'un segment de bande (4, 44) respectif en forme de coussinet,
obtention d'un coussinet lisse fini qui ne nécessite aucun autre usinage de la largeur avec enlèvement de matière mais au contraire présente après enroulement en forme de coussinet sa largeur de coussinet variable (b, b1) définitive.

2. Procédé selon la revendication 1, **caractérisé en ce que**, lors de la découpe du flanc, on forme un profil plusieurs fois étagé des extrémités périphériques (34) limitant la largeur du coussinet.

3. Procédé selon la revendication 1 ou la revendication 2, **caractérisé en ce que** l'on forme deux segments de flanc (8, 10) qui s'étendent parallèlement au sens longitudinal (6) du segment de bande (4) et sont alignés l'un avec l'autre, ainsi que deux segments de flanc (18, 20) obliques qui s'évasent vers l'extérieur par rapport au sens longitudinal (6) et délimitent un segment plus large (16), et un segment de flanc (22), également parallèle au sens longitudinal (6), qui relie entre eux les segments de flanc obliques (18, 20).

4. Procédé selon la revendication 1 ou la revendication 2, **caractérisé en ce que**, à l'état encore à plat en partant du joint de bord, on forme deux segments de flanc (40, 42) obliques qui s'évasent vers l'extérieur par rapport au sens longitudinal (6) et un segment de flanc, (46) parallèle au sens longitudinal (6), qui relie entre eux les segments de flanc obliques (40, 42).

5. Procédé selon l'une des revendications précédentes, **caractérisé en ce que**, dans la zone de bord des extrémités (12, 14) au moins presque en contact avec le segment de bande de feuillard (4, 44) à partir duquel le coussinet est enroulé, on forme une saillie en forme de languette (24) et un évidement complémentaire (26) qui peut être amené en prise avec la saillie.

6. Procédé selon l'une des revendications précédentes, **caractérisé en ce que** les chanfreins (30, 32) sont matricés au moins par segments.

7. Procédé selon l'une des revendications précédentes, **caractérisé en ce que**, avant la découpe du flanc et avant la séparation des segments de bande, les bords longitudinaux de la bande de matière plate sans fin sont rognés, profilés par roulage et le cas échéant peignés.

8. Procédé selon l'une des revendications précédentes, **caractérisé en ce que**, avant l'enroulement des segments de bande, une rainure d'huile est matricée et/ou des trous de lubrification sont poinçonnés.

9. Procédé selon l'une des revendications précédentes, **caractérisé en ce que**, après l'enroulement des segments de bande en forme de coussinet, on effectue un calibrage au choc.

10. Procédé selon l'une des revendications précédentes, **caractérisé en ce que**, après l'enroulement du coussinet, on effectue un calibrage à la broche.

11. Procédé selon l'une des revendications précédentes, **caractérisé en ce que**, à partir d'une bande de matière plate sans fin (60) ayant une première largeur, on découpe plusieurs bandes de matière plate sans fin (64, 66) ayant des largeurs inférieures et variables dans le sens longitudinal (6).
